## Europäisches Patentamt

## European Patent Office

## Office européen des brevets

(11) Veröffentlichungsnummer: **0 158 070**
**B1**

(12) # EUROPÄISCHE PATENTSCHRIFT

(45) Veröffentlichungstag der Patentschrift:
04.02.87

(51) Int. Cl.⁴: **B 60 S 1/38**

(21) Anmeldenummer: **85102024.8**

(22) Anmeldetag: **23.02.85**

---

(54) Scheibenwischblatt.

---

(30) Priorität: **06.03.84 FR 8403430**

(43) Veröffentlichungstag der Anmeldung:
**16.10.85 Patentblatt 85/42**

(45) Bekanntmachung des Hinweises auf die Patenterteilung:
**04.02.87 Patentblatt 87/6**

(84) Benannte Vertragsstaaten:
**DE FR GB IT SE**

(56) Entgegenhaltungen:
**FR-A-2 267 222**
**US-A-2 924 839**

(73) Patentinhaber: **PAUL JOURNEE S.A., 39, Avenue Marceau, F-92400 Courbevoie (FR)**

(72) Erfinder: **Filaine, Roger, Immeuble le Fossé vert app. 1739, F-27140 Gisors (FR)**

(74) Vertreter: **Patentanwaltsbüro Cohausz & Florack, Postfach 14 01 47, D-4000 Düsseldorf 1 (DE)**

## Beschreibung

Die Erfindung bezieht sich auf ein Wischblatt der Art, bei der ein durch eine Lamelle versteifter Wischgummi verwendet wird und dieser wie auch die Lamelle mit Klauen zusammenwirkt, die an den Enden waagebalkenartig angelenkter Schienen, die eine Tragkonstruktion des Wischblatts bilden, angebracht sind (siehe FR-A-2 267 222 entsprechend dem Oberbegriff des Anspruchs 1).

Bei diesen bekannten Wischblättern erfolgt die Verriegelung des Wischgummis und seiner Lamelle in bezug auf die Tragkonstruktion durch verschiedene Mittel. Diese bestehen aus Anschlägen, die mit der Außenseite einer Klaue zusammenwirken und am Wischgummi, an der Lamelle angebracht sind und/oder durch ein zusätzliches Teil gebildet werden. Diese bekannten Anschlagmittel bedingen aufwendige Ausrüstungen am Wischgummi und/oder an der Lamelle oder aber die Zugabe weiterer Teile. Der Zusammenbau erfordert im allgemeinen Fingerspitzengefühl und läßt sich nicht automatisieren.

Zweck der Erfindung ist es, bei einem Scheibenwischblatt der beschriebenen Art sehr einfache und sehr wirksame Anschlagmittel zu erhalten, die die Verwendung eines Wischgummis mit einfachem Profil ermöglichen und keiner zusätzlichen Befestigungsteile bedürfen, dabei aber einen automatischen Zusammenbau zulassen.

Zu diesem Zweck ist das erfindungsgemäße Wischblatt dadurch gekennzeichnet, daß die Lamelle mindestens eine elastisch verformbare Nase aufweist, die mit einem Loch einer Klaue der Tragkonstruktion über einen Durchgang des Wischblatts zusammenwirkt. Bei einer Ausführungsform steht die Nase über der Lamelle vor, und das Loch befindet sich im oberen Teil der Klaue. Bei einer Variante steht die Nase unter der Lamelle vor, und das Loch befindet sich im unteren Teil der Klaue. Vorzugsweise wird die Nase durch einen Ausschnitt der Lamelle gebildet, der im wesentlichen rechtwinklig zur Lamellenebene umgebogen ist.

Gut verständlich wird die Erfindung beim Lesen der folgenden Beschreibung unter Bezugnahme auf die beigeheftete Zeichnung, in der

Abbildung 1 eine schematische Ansicht im Längsschnitt eines Teils eines Wischblatt nach einem Ausführungsbeispiel der Erfindung zeigt;

Abbildung 2 ist eine Ansicht des Wischblatts in Abb. 1 im Querschnitt, und

Abbildungen 3 und 4 zeigen analog zu den Abbildungen 1 und 2 eine weitere Ausführungsform.

Das Wischblatt umfaßt einen Wischgummi 1, versteift durch eine Lamelle 2, und das Ganze ist an Krallen 3 einer Tragkonstruktion 4 befestigt.

Erfindungsgemäß umfaßt für eine der Krallen 3 (die in der Zeichnung dargestellte) die Lamelle 2 zwei elastisch verformbare Nasen 5, 5', die jeweils mit einem in die Kralle 3 eingearbeiteten Loch 6, 6' zusammenwirken. Im Bereich der Nasen 5, 5' umfaßt die Wischgummifassung 1 einen Spalt 7 für den Durchgang der Nasen.

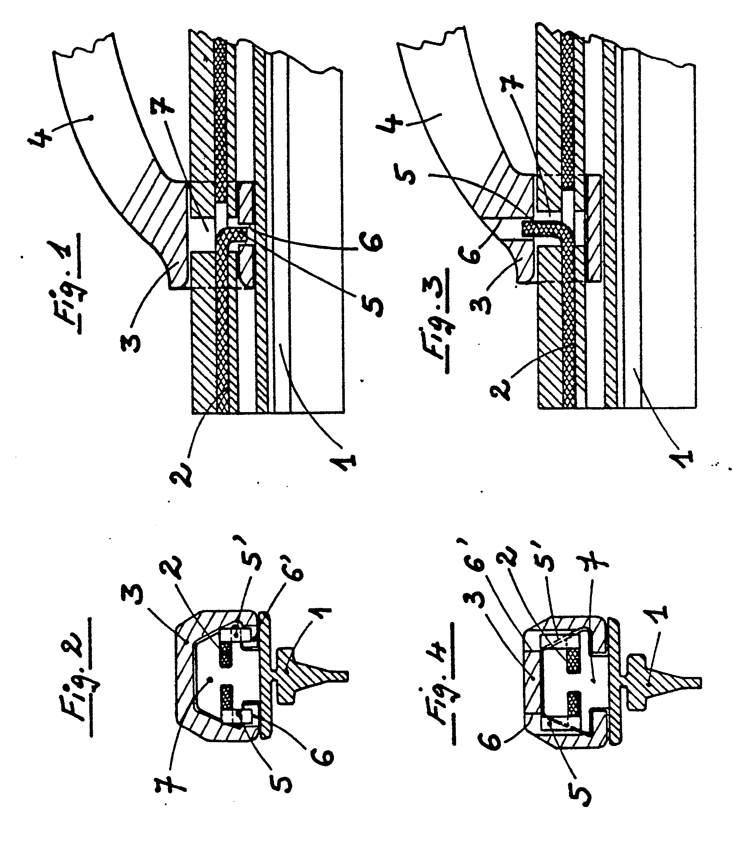

Im Falle der Abbildungen 1 und 2 stehen die Nasen 5, 5' über der Lamelle 2 vor, und die Löcher 6, 6' sind im oberen Teil der Kralle 3 angebracht. In den Abbildungen 3, 4 stehen die Nasen 5, 5' nach unten vor, und die Löcher 6, 6' sind im unteren Teil der Klaue 3 vorhanden.

Die Nasen 5, 5' können aus der Lamelle 2 durch Ausschneiden oder Ausstanzen gebildet werden und bestehen dann aus Ausschnitten, die im wesentlichen senkrecht zur Ebene der Lamelle 2 umgebogen sind.

## Patentansprüche

1. Wischblatt der Art, die einen durch eine Lamelle versteiften Wischgummi umfaßt, wobei dieser und die genannte Lamelle mit Krallen zusammenwirken, die an den Enden von waagebalkenartig angelenkten und eine Tragkonstruktion bildenden Schienen angebracht sind, dadurch gekennzeichnet, daß die Lamelle (2) mindestens eine elastisch verformbare Nase (5, 5') umfaßt, die mit einem Loch (6, 6') einer Kralle (3) der Tragkonstruktion (4) über einen Durchgang (7) der Wischgummifassung (1) zusammenwirkt.

2. Wischblatt gemäß Anspruch 1, dadurch gekennzeichnet, daß die Nase (5, 5') über der Lamelle (2) vorsteht und das Loch (6, 6') im oberen Teil der Kralle (3) gebildet wird.

3. Wischblatt gemäß Anspruch 1, dadurch gekennzeichnet, daß die Nase (5, 5') unter der Lamelle (2) vorsteht und das Loch (6, 6') im unteren Teil der Kralle (3) gebildet wird.

4. Wischblatt gemäß einem der Ansprüche 1 bis 3, dadurch gekennzeichnet, daß die Nase (5, 5') aus einem Ausschnitt der Lamelle (2) besteht und im wesentlichen senkrecht zur Ebene der Lamelle (2) umgebogen ist.

## Claims

1.) Wiper blade of the kind which comprises a wiper rubber stiffened by a plate, where the rubber and the said plate co-operate with claws which are fitted on the ends of bars which are articulated in the manner of balance beams and form a carrier construction, characterised in that the plate (2) comprises at least one elastically deformable nose (3, 5') which co-operates with ahole (6, 6') of a claw (3) of the carrier construction (4), through a passage (7) of the wiper rubber mounting (1).

2.) Wiper blade according to Claim 1, characterised in that the nose (5, 5') protrudes above the plate (2) and the hole (6, 6') is formed in the upper part of the claw (3).

3.) Wiper blade according to Claim 1, characterised in that the nose (3, 3') protrudes beneath the plate (2) and the hole (6, 6') is formed in the lower part of the claw (3).

4.) Wiper blade according to one of Claims 1 to 3, characterised in that the nose (3, 3') consists of a piece cut out of the plate (2) and is bent over substantially at right angles to the plane of the plate (2).

**Revendications**

1.- Balai d'essuie-glace du type comprenant une lame racleuse raidie par une lamelle, ladite lame racleuse et ladite lamelle coopérant avec des griffes ménagées aux extrémités de ponts articulés à la manièe de bras de balance et formant une structure porteuse, caractérisé par le fait que la lamelle (2) comporte au moins un ergot (5, 5') déformable élastiquement coopérant avec un trou (6, 6') d'une griffe (3) de la structure porteuse (4) à travers un passage (7) de la lame racleuse (1).

2.- Balai d'essuie-glace selon la revendication 1, caractérisé par le fait que l'ergot (5, 5') est en saillie au-dessus de la lamelle (2) et le trou (6, 6') est formé dans la partie supérieure de la griffe (3).

3.- Balai d'essuie-glace selon la revendication 1, caractérisé par le fait que l'ergot (5, 5') est en saillie au-dessous de la lamelle (2) et le trou (6, 6') est formé dans la partie inférieure de la griffe (3).

4.- Balai d'essuie-glace selon l'une des revendications 1 à 3, caractérisé par le fait que l'ergot (5, 5') est constitué par une découpure de la lamelle (2) et est rabattu sensiblement orthogonalement au plan de la lamelle (2).

Fig. 2

Fig. 1

Fig. 4

Fig. 3

0 158 070